# EUROPEAN PATENT SPECIFICATION

(11) **EP 0 768 527 B1**
(45) Date of publication and mention of the grant of the patent: **05.03.2008**
(21) Application number: 96660069.4
(22) Date of filing: 10.10.1996
(51) Int. Cl.: G01N 25/68

(54) **Method and system for dewpoint measurement**
Verfahren und System zur Taupunktmessung
Procédé et système pour mesurer le point de rosée

(30) Priority: 16.10.1995 FI 954923
(43) Date of publication of application: 16.04.1997
(73) Proprietor: VAISALA OYJ, 00421 Helsinki (FI)
(72) Inventor: Stormbom, Lars, 01620 Vantaa (FI)
(74) Representative: Lipsanen, Jari Seppo Einari

(56) References cited:
- EP-A- 0 282 900
- EP-A- 0 733 898
- DE-A- 3 446 277
- FEHLER D.: "Vollautomatische kontinuierliche Taupunktmessung in Verbrennungsgasen" AUTOMATISIERUNGSTECHNISCHE PRAXIS ATP, vol. 28, no. 8, 1986, pages 372-376, XP002066892

## Description

The present invention relates to a method according to the preamble of claim 1 for measuring the dewpoint.

The invention also concerns a system for dewpoint measurement.

A plurality of different methods are known in the art for measuring the dewpoint.

A traditional method of dewpoint measurement is to cool a suitable surface until condensation is formed, detect the appearance of condensation and measure the exact temperature of condensation appearance. Typically, condensation is arranged to deposit on a mirror surface and the appearance of condensation is detected optically from said mirror surface. Such optical detection of condensation may be based on, e.g., attenuation of light reflected from such a mirror surface.

Other conventional dewpoint detection methods of nonoptical character include capacitive methods and those based on the attenuation of a surface wave (using an SAW sensor) on a condensation-covered surface, whereby the condensation-sensing surface forms a part of an electronic measurement circuit.

The prior art is further described in the following documents:
FEHLER D.: "Vollautomatisehe kontinuierliche Taupunktmessung in VerbrennungSgasen" AUTOMATISIERUNGSTECHNISCHE PRAXIS ATP, vol. 28, no. 8,1986, pages 372-376.
DE 34 46 277 A (Forschungsinstitut Prof. Dr.-lng. habil, Dr. phil. nat. Karl Otto Lehmannn, Nachf. GmbH & Cie) 19 June 1986.
EP-A-0 282 900 (DRÄGERWERK AG) 21 September 1988.

The above-described methods measure the dewpoint temperature directly. The accuracy of the method is dictated by the accuracies of condensation appearance detection and condensation surface temperature sensing.

These methods are hampered by a number of shortcomings. Their measurement apparatuses are costly. Contamination of the dewpoint sensing surface causes an error even when cyclic measurement and automatic cleaning are used to avoid contamination. In spite of such precautions, the short maintenance periods of the apparatuses under process conditions limit their applications. Particularly a salt layer deposited on the sensor surface causes a measurement error which is difficult to identify.

Due to the low vapour pressure and slow evaporation rate of an ice/water condensation layer, the response time particularly at low dewpoint temperatures becomes long (reaching up to several minutes). Similarly, if thick condensation is deposited on the sensor due to a fast change of ambient conditions, the sensor recovery time becomes very long.

Also indirect methods of dewpoint measurement are known in the art based on sensing the dewpoint from relative humidity and the corresponding temperature. An advantage of these methods over direct dewpoint detection is a short response time, reduced contamination and suitability for use at elevated temperatures.

A drawback of indirect measurement is the large error at low humidities and the deleterious effect of chemicals on the sensitivity of sensors measuring relative humidity.

It is an object of the present invention to overcome the disadvantages of the above-described techniques and to provide an entirely novel type of dewpoint measurement method.

The goal of the invention is achieved by virtue of feeding a train of pulsed electrical energy into a first resistive element of a sensor comprising two adjacent resistive elements and measuring the resistance of the second resistive element as a function of time, whereby the appearance of condensation can be inferred from the response of the second resistive element.

More specifically, the method according to the invention is defined in claim 1.

Furthermore, the system according to the invention is defined in claim 4.

The invention provides significant benefits.

The arrangement according to the invention achieves a reliable sensor construction at minimal costs. By virtue of the pulsed heating power feed, the actual measurement period is free from any accuracy deteriorating effects normally caused by the externally introduced power input of the measurement process. An additional benefit of the response-waveform-based measurement scheme is its flexibility: on one hand, an extremely simple electronic circuitry is sufficient for merely detecting the condensation, and on the other hand, a more extensive waveform analysis of the measurement pulse permits monitoring of different types of phenomena on the sensor surface such as the appearance of ice. This type of a sensor has a relatively fast response.

In the following, the invention will be examined in more detail with the help of exemplifying embodiments illustrated in the attached drawings in which
Figure 1 is a top view of a sensor structure ;
Figure 2 is section A-A of the sensor structure of Fig. 1;
Figure 3 is a plot of typical response curves evoked by the measurement pulse in the method according to the invention; and
Figure 4 is a schematic block diagram of a measurement system according to the invention.

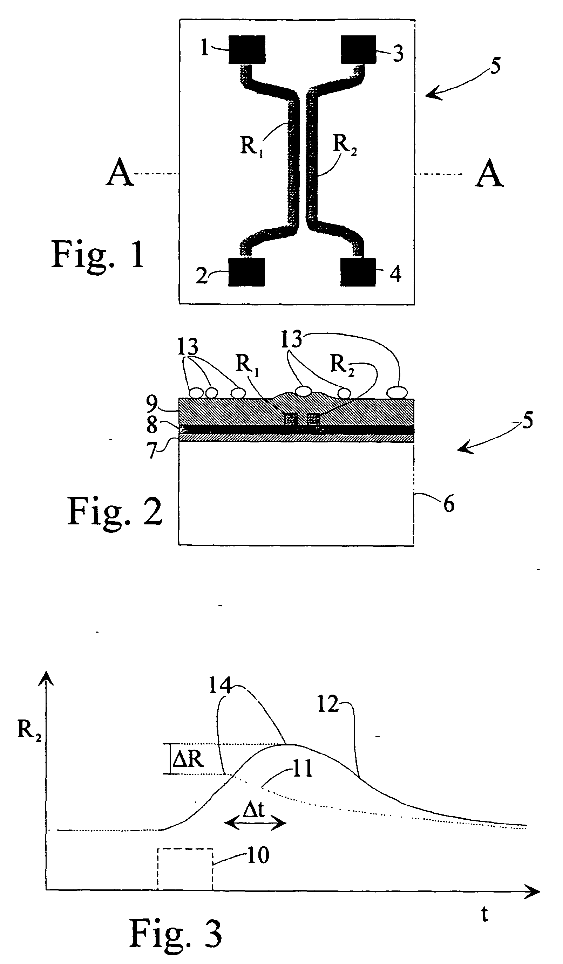

Referring to Fig. 1, a sensor 5 according to the invention comprises two active resistive elements R₁ and R₂ located close to the sensor surface. One of the elements, R₁ in the illustrated case, is fed via terminals 1 and 2 with a heating power pulse, whereby the measuring element R₂ is heated and its resistance is sensed over terminals 3 and 4. Particularly the material of the measuring element R₂ is selected such that the temperature dependence of its resistance is maximally large. For practical reasons of manufacture, both resistive elements are typically made from the same material selected from the group of, e.g., Pt, Au, Cr, Ni and Pd.

Referring to Fig. 2, the sensor 5 is made onto a substrate 6, typically of glass or silicon. Onto the substrate 6 is deposited a layer 7 of high thermal conductivity such as aluminium. Onto the thermally conductive layer 7 is deposited an insulating layer 8, typically of a suitable polymer or silicon nitride (SiₓN_{y}). Onto the insulating layer 8 are formed electrodes 1, 2, 3 and 4 as well as the resistive elements R₁ and R₂ using, e.g., patterning techniques. The resistive elements R₁ and R₂ are located close to each other in order to maximize heat transfer from the heating element R₁ to the measuring element R₂. Advantageously, the resistive elements R₁ and R₂ are aligned adjacently parallel with each other. Also the layer 8 acting as a dielectric insulating layer is selected to have maximized thermal conductivity. When required, the resistive elements R₁ and R₂ are additionally coated with a suitable polymer layer 9 to provide a mechanical protection for the resistive elements. Thus, the condensation 13 can form either directly onto the resistive elements R₁ and R₂ or onto the polymer layer 9.

Alternatively, the resistive elements R₁ and R₂ may be shaped into a jagged or wavy pattern conforming with each other, whereby heat transfer from one element to the other is maximized.

The table below gives dimensional examples of an embodiment of the sensor.

| Dimension | Typical value | Range of variation |
|---|---|---|
| Thickness of thermally conductive layer 8 | 0.1 µm | 0.02-1 µm |
| Thickness of dielectric layer 8 | 0.05 µm | 0.02-0.5 µm |
| Thickness of resistive elements R₁ and R₂ | 1 µm | 0.1-3 µm |
| Width of resistive elements R₁ and R₂ | 5 µm | 0.1-50 µm |
| Length of resistive-elements R₁ and R₂ | 10 mm | 2-50 mm |
| Resistance of resistive elements R₁ and R₂ at room temp. | 200 ohm | 10-2000 ohm |
| Thickness of polymer layer 9 | 1 µm | 0.1-5 µm |
| Input pulse power to resistive element R₁ | 1 W | 0.1-10 W |
| Typical resistance change ΔR of resistive element R₂ | 20 ohm | 5-80 ohm |

The sensor may be fabricated using conventional silicon micromechanical methods including vacuum evaporation and masking.

Referring to Fig. 3, the heating resistive element R₁ is fed with a pulsed signal 10, typically having a pulse duration of 5 - 100 ms with a pulse interval of 1 - 10 s. The pulse peak power may be varied in the range 0.1 - 10 mW. In the case of no condensation, the resistance of the measuring resistive element R₂ changes according to curve 12 in the diagram as a response to an imposed thermal impulse 10, and respectively, according to curve 11 if the surface of the sensor 5 is covered with dew or ice. Analysis of the response signal can be based on the delay Δt of the response curve maximum 14 from the start of the imposed thermal impulse, or alternatively, on the difference ΔR of the maximum resistance from the steady-state resistance of the element, or on both of these. As a practical example, a concise exemplifying interpretation of the response curves is given:
Δt exceeds a preset value; condensation present
ΔR exceeds a preset value; condensation present.

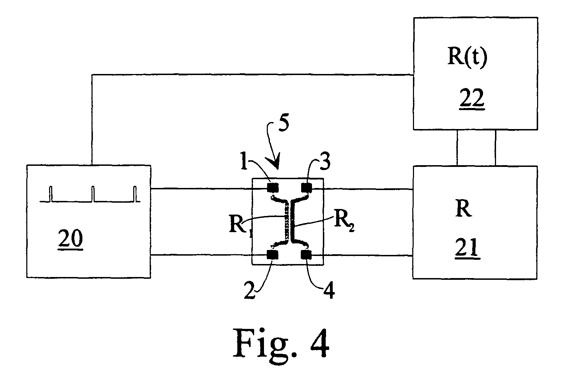

Referring to Fig. 4, the measurement system according to the invention comprises a pulsed power source 20 suited for feeding a pulsed signal over the terminals 1 and 2 of the resistive element R₁ acting as the heating element. The resistance of the measuring resistive element R₂ is measured with the help of a measurement circuitry 21. When required, the shape of the response signal evoked by the heating pulse delivered by the pulsed power source 20 is measured with the help of a waveform analyzer 22. The analyzer 22 is synchronized with the pulsed power source 20. In practice, both units 21 and 22 may be functionally combined by sampling the resistance of the resistive element R₂ at a suitable sampling rate and then processing these measurement values by digital techniques. The maxima of the response curve may be detected from, e.g., the zero-crossing points of the derivative of the measured resistance.

## Claims

1. A method of measuring dewpoint by means of a measurement sensor (5) comprising a heating resistive element (R₁) and a separate measuring resistive element (R₂), wherein
- said sensor is heated by means of a pulsed electrical signal (10) applied to said heating resistive element;
- the resistance of said measuring resistive element is measured as a function of time, providing thus a sensor response to said pulsed electrical signal; and
- analysing said sensor response;
**characterized in that**
- the pulses of said pulsed electrical signal (10) have a rectangular shape; and
- the analysis of said sensor response is performed by determining the temporal shift (At) and/or the resistance change (ΔR) between the maximum value (14) of the sensor response (11) for a condensation-covered sensor and the maximum value (14) of the sensor response (12) in the case of no condensation.

2. A method as defined in claim 1, **characterized in that** the temporal shift (At) of the maximum value (14) of the condensation-covered sensor response (11) relative to the maximum value (14) of the sensor response (12) in the case of no condensation is determined.

3. A method as defined in claim 1, **characterized in that** the resistance change (ΔR) of the maximum value (14) of the condensation-covered sensor response (11) relative to the maximum value (14) of the sensor response (12) in the case of no condensation is determined.

4. A system for dewpoint measurement, comprising:
- a measurement sensor (5) comprising:
- a substrate (6);
- a heating resistive element (R₁) and a measuring resistive element (R₂) placed in the vicinity of, and in intimate thermal contact with, said heating resistive element, both resistive elements being located on said substrate;
- a power source (20) for delivering a pulsed electrical signal (10) to said heating resistive element; and
- measurement means (21, 22) for measuring the sensor response to said pulsed electrical signal in the form of the resistance of said measuring resistive element as a function of time;
**characterized in that**
- the pulses of said pulsed electrical signal (10) have a rectangular shape; and
- said measurement means (21, 22) is adapted for determining the temporal shift (At) and/or
the resistance change (ΔR) between the maximum value (14) of the sensor response (11) for a condensation-covered sensor and the maximum value (14) of the sensor response (12) in the case of no condensation.

5. A system as defined in claim 4, **characterized in that** said system additionally incorporates means (22) for analyzing the waveform of the sensor response (11).

## Patentansprüche

1. Verfahren zur Taupunktmessung mit Hilfe eines Messsensors (5), der ein Widerstandsheizelement (R₁) und ein separates Widerstandsmesselement (R₂) aufweist, wobei
- der Sensor mit Hilfe eines gepulsten elektrischen Signals (10), das an das Widerstandsheizelement gegeben wird, erwärmt wird;
- der Widerstand des Widerstandsmesselements in Abhängigkeit der Zeit gemessen wird, um so eine Sensorantwort auf das gepulste elektrische Signal bereitzustellen; und
- die Sensorantwort ausgewertet wird; **dadurch gekennzeichnet, dass**
- die Pulse des gepulsten elektrischen Signals (10) eine Rechteckform aufweisen; und
- die Auswertung der Sensorantwort über eine Bestimmung der zeitlichen Verschiebung (Δt) und/oder der Widerstandsänderung (ΔR) zwischen dem Höchstwert (14) der Sensorantwort (11) für einen mit Kondenswasser bedeckten Sensor und dem Höchstwert (14) der Sensorantwort (12), wenn keine Kondensation auf tritt, erfolgt.

2. Verfahren nach Anspruch 1, **dadurch gekennzeichnet, dass** die zeitliche Verschiebung (Δt) des Höchstwerts (14) der Sensorantwort (11) für einen mit Kondenswasser bedeckten Sensor bezüglich des Höchstwerts (14) der Sensorantwort (12), wenn keine Kondensation auftritt, bestimmt wird.

3. Verfahren nach Anspruch 1, **dadurch gekennzeichnet, dass** die Widerstandsänderung (ΔR) des Höchstwerts (14) der Sensorantwort (11) für einen mit Kondenswasser bedeckten Sensor bezüglich des Höchstwerts (14) der Sensorantwort (12), wenn keine Kondensation auftritt, bestimmt wird.

4. System zur Taupunktmessung, mit:
- einem Messsensor (5), mit:
- einem Substrat (6);
- einem Widerstandsheizelement (R₁) und einem Widerstandsmesselement (R₂), das in der Nähe von und in engem thermischen Kontakt zu dem Widerstandsheizelement angeordnet ist, wobei beide Widerstandselemente auf dem Substrat angeordnet sind;
- einer Energiequelle (20), die ein gepulstes elektrisches Signal (10) an das Widerstandsheizelement gibt; und
- einer Messeinrichtung (21, 22) zur Messung der Sensorantwort auf des gepulste elektrische Signal in Form des Widerstands des Widerstandsmesselements in Abhängigkeit der Zeit; **dadurch gekennzeichnet, dass**
- die Pulse des gepulsten elektrischen Signals (10) eine Rechteckform aufweisen; und
- die Messeinrichtung (21, 22) dazu ausgelegt ist, die zeitliche Verschiebung (Δt) und/oder die Widerstandsänderung (ΔR) zwischen dem Höchstwert (14) der Sensorantwart (11) für einen mit Kondenswasser bedeckten Sensor und dem Höchstwert (14) der Sensorantwort (12), wenn keine Kondensation auftritt, zu bestimmen.

5. System nach Anspruch 4, **dadurch gekennzeichnet, dass** das System ferner eine Einrichtung (22) zur Auswertung der Wellenform der Sensorantwort (11) aufweist.

## Revendications

1. Procédé de mesure du point de rosée au moyen d'un capteur de mesure (5) comprenant un élément résistif de chauffage (R₁) et un élément résistif de mesure séparé (R₂), dans lequel
- ledit capteur est chauffé au moyen d'un signal électrique pulsé (10) appliqué au dit élément résistif de chauffage ;
- la résistance dudit élément résistif de mesure est mesurée en fonction du temps, fournissant ainsi une réponse du capteur au dit signal électrique pulsé; et
- l'analyse de ladite réponse du capteur ;
**caractérisé en ce que** :
- les impulsions dudit signal électrique pulsé (10) ont une forme de créneau; et
- l'analyse de ladite réponse du capteur est conduite en déterminant le décalage temporel (Δt) et/ou la variation de résistance (ΔR) entre la valeur maximale (14) de la réponse du capteur (11) pour un capteur couvert de condensation et la valeur maximale (14) de la réponse du capteur (12) en l'absence de condensation.

2. Procédé selon la revendication 1, **caractérisé en ce que** le décalage temporel (Δt) de la valeur maximale (14) de la réponse du capteur couvert de condensation (11) par rapport à la valeur maximale (14) de la réponse du capteur (12) en l'absence de condensation est déterminé.

3. Procédé selon la revendication 1, **caractérisé en ce que** la variation de résistance (ΔR) de la valeur maximale (14) de la réponse du capteur couvert de condensation (11) par rapport à la valeur maximale (14) de la réponse du capteur (12) en l'absence de condensation est déterminée.

4. Système de mesure du point de rosée, comprenant :
- un capteur de mesure (5) comprenant :
- un substrat (6) ;
- un élément résistif de chauffage (R₁) et un élément résistif de mesure (R₂) placés à proximité de, et en contact thermique étroit avec ledit élément résistif de chauffage, les deux éléments résistifs étant situés sur ledit substrat;
- une source d'alimentation (20) pour délivrer un signal électrique pulsé (10) au dit élément résistif de chauffage; et
- des moyens de mesure (21, 22) pour la mesure de la réponse du capteur au dit signal électrique pulsé sous ia forme de la résistance dudit élément résistif de mesure en fonction du temps;
**caractérisé en ce que**
- les impulsions dudit signal électrique pulsé (10) ont une forme de créneau ; et
- lesdits moyens de mesure (21, 22) sont adaptés pour déterminer le décalage temporel (Δt) et/ou la variation de résistance (ΔR) entre la valeur maximale (14) de la réponse du capteur (11) pour un capteur couvert de condensation et la valeur maximale (14) de la réponse du Capteur (12) en l'absence de condensation.

5. Système selon la revendication 4, **caractérisé en ce que** ledit système comprend en outre un moyen (22) pour l'analyse de la forme d'onde de la réponse du capteur (11).
